# EUROPÄISCHE PATENTANMELDUNG

(11) **EP 1 358 783 A1**
(43) Veröffentlichungstag der Anmeldung: **05.11.2003**
(21) Anmeldenummer: 03101132.3
(22) Anmeldetag: 24.04.2003
(51) Int. Cl.: A01B 61/04

(54) **Gefederte Halterungsanordnung und verstellbare Schwenkvorrichtung für eine solche**

(30) Priorität: 02.05.2002 US 137544
(71) Anmelder: DEERE & COMPANY, Moline, Illinois 61265-8098 (US)
(72) Erfinder: Ruckle, Jarrod Ray, IA 50035, Bondurant (US); Goins, Garrett Lee, IA 50021, Ankeny (US)
(74) Vertreter: Holst, Sönke, Dr.

(57) **Zusammenfassung**

Es wird eine gefederte Halterungsanordnung (10) mit einem festen Anschlag (40) und eine verstellbare Schwenkvorrichtung für eine solche beschrieben. Die Halterungsanordnung (10) enthält einen Schwenkbereich mit einer Schwenkvorrichtung, welche einen Exzentermechanismus (36) aufweist, mit dem eine Verstellung der Schwenkachse (36a) relativ zum Anschlag (40) vorgenommen werden kann, so dass die Position einer Schaftanordnung (42) und der Neigungswinkel eines Bodenbearbeitungswerkzeugs (56) eingestellt werden kann, ohne dass die Position des Anschlags (40) verändert werden muss. Eine Lagerbuchse (36) mit einer exzentrischen Bohrung (37) und einer Passfeder (84) nimmt einen mit einer Nut (78) versehenen Drehbolzen (34) auf. Eine Sicherungsmutter fixiert die Schwenkvorrichtung mit der gewünschten Schaftneigung. Markierungen (90, 76) an der Befestigungshalterung (14) und an dem Bolzen (34) stellen eine einfach lesbare Anzeige der eingestellten Schaftneigung dar, so dass auf diese Art mehrere an einem Werkzeugträger (12) angebrachte Halterungsvorrichtungen (14) mit ein und demselben Neigungswinkel eingestellt werden können.

## Beschreibung

Die Erfindung betrifft eine gefederte Halterungsanordnung, die zum Bewegen in eine Vorwärtsrichtung über den Boden eingerichtet ist und des Weiteren eine verstellbare Schwenkvorrichtung für eine solche Halterungsanordnung. Die Halterungsanordnung enthält eine Befestigungshalterung, eine Schaftanordnung, welche ein oberes Anschlussende und ein unteres Werkzeuganschlussende zur Aufnahme eines Bodenbearbeitungswerkzeugs aufweist, eine Schwenkvorrichtung, mit der das Anschlussende der Schaftanordnung zum Verschwenken um eine im Wesentlichen quer zur Vorwärtsrichtung verlaufenden Schwenkachse mit der Befestigungshalterung verbunden ist, einen Federungszusammenbau, mit dem das Werkzeuganschlussende in Richtung des Bodens gedrückt wird und einen Anschlag, welcher in einer relativ zur Befestigungshalterung im Wesentlichen festgelegten Position beabstandet zur Schwenkachse angeordnet ist, so dass eine Schwenkbewegung der Schaftanordnung um die Schwenkachse nach unten in eine Arbeitsposition begrenzt wird.

Gefederte Halterungsanordnungen umfassen in der Regel eine an einem Werkzeugträger mit rechteckigem Querschnitt angebrachte Halterung, die sich nach hinten und oben zu einer nach unten und vorn gerichteten ersten Federanlagefläche erstreckt. Eine Feder wird zwischen der Federanlagefläche und einer nach oben gerichteten zweiten Federanlagefläche eines schwenkbar am unteren Abschnitt der Halterung angelenkten Elements zusammengedrückt, und ein werkzeugtragender Schaft ist an dem Element befestigt. Ein Spannungsverbindungszusammenbau erstreckt sich von diesem Element durch die Feder und durch eine Öffnung in der ersten Federanlagefläche der Halterung, um die Vorspannung der Feder einzustellen und die vertikale Position des am Schaft befestigten Bodenbearbeitungswerkzeugs einzustellen. Eine derartige Halterungsanordnung ist als Beispiel in der US 3 700 039 A dargestellt. Diese Halterungsanordnung stellt gute Kraft-Weg-Charakteristiken bereit, hat jedoch eine Vielzahl an Teilen und ist teuer und zeitaufwendig beim Zusammensetzen und bei der Reparatur.

Andere, bereits erhältliche Halterungszusammenbauten, insbesondere solche mit vielen Spannungsübertragungselementen (US 4 261 423 A) oder Federträgerelementen, wie Stiften, Bügeln, Abstandsscheiben und Unterlegscheiben erfordern typischerweise gründliche Instruktionen für das Zusammensetzen und das Zerlegen. Bei einigen Halterungszusammenbauten vermindern die Spannungsübertragungselemente die Kräfte im Schwenkbereich in der Ruheposition, was Spiel der Schwenklagerung bedingt, das häufig als Qualitätsnachteil angesehen wird und dazu führt, dass sich das Bodenbearbeitungswerkzeug beim Arbeitsvorgang seitlich bewegt. Die Vorspannung der Feder in der normalen Arbeitsposition ist häufig nicht hinreichend, um fortdauernde Bewegungen der Feder ("tripping") zu unterbinden.

In der US 6 250 398 A wird eine gefederte Halterungsanordnung beschrieben, die kein Spannungsübertragungselement benötigt. Die US 6 065 548 A beschreibt einen Federsitzaufbau, der eine im Wesentlichen senkrechte Ausrichtung der unteren Windungen der Spiralfeder relativ zur Mittellinie der Spiralfeder sowohl in einer Bodeneingriffsposition als auch in einer zusammengedrückten Position ermöglicht, so dass Einknicken und durch Einknicken hervorgerufene Ermüdung der Feder reduziert wird. Ein oberer Anschlag für den Schaft ist durch die Feder gegeben, wenn die Federwindungen gegeneinander gedrückt sind. Um zu verhindern, dass Federwindungen ausbrechen und eine dauerhafte Verformung der Feder eintritt, werden Federanschlagvorrichtungen eingesetzt, wie sie beispielsweise in der US 6 250 397 beschrieben sind. Die Anschlagvorrichtung beinhaltet auch einen Anschlag für die Abwärtsbewegung, welcher die untere Bodeneingriffsposition des Schaftes und die Neigung des an dem Schaft montierten Werkzeuges festlegt. Auch wenn die oben beschriebenen Vorrichtungen im Vergleich zu den meisten anderen verfügbaren gefederten Halterungsanordnungen kostengünstiger und zuverlässiger sind, kann eine untere Bodeneingriffsposition des Schaftes und die Neigung des Werkzeuges nicht auf einfache Weise eingestellt werden. Daher ist die Ausbildung des Schaftes zum Erlangen größerer Tiefen und Werkzeugneigungen ein weiterhin bestehendes Problem bei Halterungsanordnungen, die kein Spannungsübertragungselement zum Einstellen der unteren Bodeneingriffsposition des Schaftes aufweisen. Bisher ist es bei einer Vielzahl dieser Halterungsanordnungen nicht möglich gewesen, schnelle und präzise Einstellungen über die gesamte Breite des Arbeitsgerätes vorzunehmen.

Die der Erfindung zu Grunde liegende Aufgabe wird darin gesehen, eine Halterungsanordnung und eine einstellbare Schwenkachse der eingangs genannten Art anzugeben, durch welche die vorgenannten Probleme überwunden werden.

Die Aufgabe wird erfindungsgemäß durch die Lehre der Patentansprüche 1 und 17 gelöst. Weitere vorteilhafte Ausgestaltungen und Weiterbildungen der Erfindung gehen aus den Unteransprüchen hervor.

Erfindungsgemäß wird eine gefederte Halterungsanordnung der eingangs genannten Art mit einer Schwenkvorrichtung versehen, welche eine Einstellvorrichtung enthält, mit der eine Bewegung der Schwenkachse relativ zum Anschlag derart durchführbar ist, dass eine untere Arbeitsposition des Werkzeuganschlussendes einstellbar ist. Dadurch wird verhindert, dass sich das Werkzeug während der Bodeneingriffsposition zu weit in den Boden hineinziehen kann und eine vorgebbare Bodeneindringtiefe und Werkzeugneigung überschritten wird. Bei der Einstellung der unteren Arbeitsposition ist es dabei nicht erforderlich, eine Verstellung des Anschlages vorzunehmen, um die Anschlagstellung der Schaftanordnung einzustellen. Der Anschlag bzw. die Anschlagfläche ist vorzugsweise an der Befestigungshalterung ausgebildet und gegebenenfalls nicht verstellbar. Um dennoch eine Verstellung der Anschlagstellung vornehmen zu können, ist es möglich, über die Einstellvorrichtung eine Verschiebung der Schwenkachse der Schwenkvorrichtung relativ zum fest installierten Anschlag vorzunehmen. Durch die Verschiebung der Schwenkachse wird eine Schwenkstellung der Schaftanordnung relativ zum Anschlag verändert, so dass die Anschlagstellung der Schaftanordnung variierbar ist. Vorzugsweise ist die Schwenkachse eine sich auf der Schaftanordnung befindliche Schaftachse. Es ist aber auch denkbar, dass sich die Schwenkachse außerhalb der Schaftanordnung befindet.

In einer weiteren bevorzugten Ausgestaltung der Erfindung enthält die Schwenkvorrichtung eine sich von der Schwenkachse aus radial erstreckende Erweiterung, welche mit dem Anschlag in Kontakt tritt, sobald das Werkzeug in eine unterste Position bewegt wird. Vorzugsweise erstreckt sich die Erweiterung in Bearbeitungsrichtung nach vorn und bewegt sich aufwärts, wenn sich die Schaftanordnung hinter dem Schwenkbereich bzw. hinter der Schwenkachse abwärts bewegt. Sobald die Schaftanordnung hinter dem Schwenkbereich die unterste Position erreicht hat, stößt der sich nach vorn erstreckende Teil der Schwenkvorrichtung bzw. die Erweiterung gegen den Anschlag und definiert die Anschlagstellung der Schaftanordnung.

In einer weiteren bevorzugten Ausgestaltung der Erfindung enthält die Schwenkvorrichtung ein Gussteil, welches eine kreisförmige Bohrung und eine integrierte, mit dem Anschlag in Kontakt tretende und ausgehend von der Bohrung sich radial erstreckende Erweiterung aufweist. Das Gussteil ist dabei mit der Bohrung konzentrisch zur Schwenkachse gelagert. Vorzugsweise erstreckt sich die mit dem Anschlag in Kontakt tretende Erweiterung ausgehend von der Schwenkachse nach vorn. In einer weiteren sich nach hinten erstreckenden Erweiterung ist ein Anschlussbereich ausgebildet, an den die Schaftanordnung befestigbar ist. Bei befestigter Schaftanordnung bewegt sich dann die sich nach vorn erstreckende Erweiterung aufwärts, sobald sich die Schaftanordnung abwärts bewegt und stößt gegen den Anschlag, wenn die unterste Position der Schaftanordnung erreicht ist.

In einer weiteren bevorzugten Ausgestaltung der Erfindung enthält die Einstellvorrichtung einen mit der Befestigungshalterung verbundenen und die Schwenkachse definierenden Exzenter. Durch Verdrehen des Exzenters kann die Schwenkachse in ihrer Lage zur Befestigungshalterung verschoben und damit die relative Lage der Schwenkachse zum Anschlag verändert werden. Dadurch sind auf einfache Art und Weise Veränderungen der Anschlagstellungen der Schaftanordnung möglich und Bodeneindringtiefen und Neigungswinkeleinstellungen des Werkzeugs variierbar. Vorzugsweise ist ein Verbindungsteil enthalten, welches den Exzenter lösbar gegen Verdrehen gegenüber der Befestigungshalterung sichert und wahlweise verschiedene Drehpositionen des Exzenters zur Einstellung der Anschlagstellung erlaubt. Als Verbindungsteil kann ein drehfest mit dem Exzenter verbundener Drehbolzen dienen, der auf der Befestigungshalterung gelagert ist und durch eine Gewindevorrichtung an der Befestigungshalterung verdrehbar befestigt wird.

In einer weiteren bevorzugten Ausgestaltung der Erfindung enthält der Exzenter eine die Schwenkachse definierende drehbare Lagerbuchse, wobei die Lagerbuchse eine von der Schwenkachse beabstandete Rotationsachse enthält, so dass eine Drehung der Lagerbuchse eine Verschiebung der Schwenkachse hervorruft. Die Schwenkachse wird vorzugsweise durch eine konzentrisch zur Mantelfläche der zylindrischen Lagerbuchse verlaufende Achse definiert. Die Rotationsachse der Lagerbuchse verläuft in einem vorgegebenen Abstand parallel zur Schwenkachse und ist relativ zur Befestigungshalterung fixiert angeordnet. Dadurch, dass die Rotationsachse der Lagerbuchse von der Schwenkachse beabstandet und gegenüber der Befestigungshalterung fixiert angeordnet ist, tritt durch Verdrehung der Lagerbuchse um die Rotationsachse eine Verschiebung der Schwenkachse gegenüber der Befestigungshalterung ein.

In einer weiteren bevorzugten Ausgestaltung der Erfindung sind ein Feststellmittel, welches die Lagerbuchse in einer ausgewählten Drehposition feststellt, und ein Anzeigemittel enthalten, welche eine sichtbare Anzeige der ausgewählten Drehposition liefern. Vorzugsweise ist die Anzeige direkt an der Befestigungshalterung ausgebildet und gibt einer Bedienperson eine genaue Information über eine vorgenommene Einstellung. Dies bietet insbesondere den Vorteil, dass mehrere auf dem Werkzeugträger montierte Halterungsanordnungen auf einfache Weise mit übereinstimmenden Einstellungen versehen werden können.

In einer weiteren bevorzugten Ausgestaltung der Erfindung ist ein Drehbolzen enthalten, welcher sich durch die Lagerbuchse erstreckt und drehfest mit der Lagerbuchse verbunden ist, so dass eine Drehung des Drehbolzens eine Drehung der Lagerbuchse hervorruft. Vorzugsweise erstreckt sich der Drehbolzen durch die Befestigungshalterung und ist um eine feste Drehbolzenachse drehbar gelagert. Des Weiteren enthält der Drehbolzen ein Anzeigemittel, welches eine Anzeige der Drehposition der Lagerbuchse liefert. Die Drehbolzenachse entspricht dabei der Rotationsachse der Lagerbuchse, so dass durch Drehen des Drehbolzens eine Verschiebung der Schwenkachse erfolgt. Da die Drehposition des Drehbolzens analog zur Drehposition der Lagerbuchse verläuft, ist durch die Anzeige der Drehposition des Drehbolzens eine Information über die Lage der Schwenkachse ableitbar.

In einer weiteren bevorzugten Ausgestaltung der Erfindung umfasst der Exzenter eine kreisförmige Lagerbuchse mit einer zentralen Schwenkachse und eine Montagebohrung mit einer von der zentralen Schwenkachse beabstandeten Bohrungsachse. Des Weiteren ist ein Verbindungsteil enthalten, das sich durch die Bohrung und durch die Befestigungshalterung erstreckt, wobei der Exzenter um die Bohrungsachse drehbar ist. Durch die exzentrisch angeordnete Montagebohrung wird auf einfache Weise eine Beabstandung der Rotationsachse zur Schwenkachse erzeugt. Ein Verbindungsteil verbindet die Lagerbuchse mit der Befestigungshalterung. Dabei kann es sich um einen zylindrischen Stift oder um einen Lagerbolzen handeln, der an seinen Seiten an der Befestigungshalterung gelagert ist und in einem mittleren Bereich die Lagerbuchse führt. Durch eine drehfeste Verbindung zwischen Lagerbolzen und Lagerbuchse ist es möglich die Lagerbuchse durch Drehen des Lagerbolzens um die Bohrungsachse (Rotationsachse) zu drehen. Dadurch erfolgt eine Verschiebung der Schwenkachse.

In einer weiteren bevorzugten Ausgestaltung der Erfindung enthält die Befestigungshalterung Seitenteile an welche die Einstellvorrichtung lösbar befestigt ist. Dadurch wird gewährleistet, dass durch Betätigung der Einstellvorrichtung Einstellungen bzw. Verstellungen vorzugsweise relativ zur Befestigungshalterung geschehen. Somit wird auch die Verschiebung bzw. Verlagerung der Schwenkachse relativ zur Befestigungshalterung und damit relativ zu dem an der Befestigungshalterung fest installierten Anschlag vorgenommen.

In einer weiteren bevorzugten Ausgestaltung der Erfindung enthält die Schwenkvorrichtung einen Anschlagbereich, welcher sich radial von der Schwenkachse aus erstreckt und mit der Schaftanordnung auf einer Kreisbahn rotiert, wobei auf einem festgelegten Punkt der Kreisbahn der Anschlag durch die Befestigungshalterung definiert ist. Vorzugsweise erstreckt sich der Anschlagbereich nach vorn und tritt mit dem Anschlag an der Befestigungshalterung in Kontakt, sobald die Schaftanordnung ihre unterste Stellung bzw. Position erreicht hat. Vorzugsweise befindet sich der Anschlagbereich auf einer Fläche am Gussteil, wobei der Anschlagbereich mit der Bewegung der Schaftanordnung auf der durch das Gussteil und die Schwenkachse definierten Kreisbahn bewegt. Durch Veränderung der Schwenkachse variiert die Lage des Anschlagbereichs auf dem Gussteil, so dass in Abhängigkeit der Schwenkachseneinstellung der Anschlagbereich auf unterschiedlichen Kreisbahnen rotiert, wobei der Anschlag, mit dem der Anschlagbereich in Kontakt tritt, entsprechend der Ausbildung der Befestigungshalterung auf einen bestimmten Punkt auf der Kreisbahn festgelegt wird.

In einer weiteren bevorzugten Ausgestaltung der Erfindung enthält die Schwenkvorrichtung ein Befestigungsmittel, welches einen Drehbolzen aufweist. Das Befestigungsmittel wird von der Montagebohrung aufgenommen und stellt eine Verbindung der Lagerbuchse zur Befestigungshalterung her. Dazu dient vorzugsweise ein einen zylindrischen Schaft aufweisender Bolzen oder Drehbolzen bzw. Lagerbolzen, durch den die Lagerbuchse an der Befestigungshalterung, vorzugsweise an den Seitenteilen, gelagert werden kann. Durch ein Gewindeteil am Schaft des Bolzens kann dieser beispielsweise durch eine Schraubenmutter mit der Befestigungshalterung verspannt werden, so dass er gegen Verdrehen gesichert bzw. arretierbar ist.

In einer weiteren bevorzugten Ausgestaltung der Erfindung enthält die Schwenkvorrichtung eine Fixiereinrichtung, welche eine Passfeder aufweist, wobei die Passfeder von einer Nut am Drehbolzen aufgenommen wird. Vorzugsweise wird die Fixiereinrichtung zwischen der Lagerbuchse und dem Befestigungsmittel angeordnet und die Lagerbuchse und das Befestigungsmittel gegeneinander gegen Verdrehen gesichert, so dass bei Verdrehen des Befestigungsmittels sich die Lagerbuchsenachse verlagert und dadurch eine Verlagerung der effektiven Schwenkachse der auf der Lagerbuchse gelagerten Schaftanordnung stattfindet. Beispielsweise stellt eine auf der Innenseite der Montagebohrung eingebrachte Gegennut in Verbindung mit der Passfeder, die sowohl in die Nut als auch in die Gegennut eingreift, eine Fixiereinrichtung dar, so dass keine Verdrehungen zwischen Lagerbuchse und Schraube möglich sind.

In einer weiteren bevorzugten Ausgestaltung der Erfindung enthält das Befestigungsmittel ein mit einem Kopf versehenes Teil, welches in die Montagebohrung einführbar ist, wobei das Teil Anzeigemittel aufweist, welche zur Bestimmung der eingestellten Stellung der Schwenkvorrichtung eine sichtbare Anzeige der ausgewählten Drehposition des Befestigungsmittels liefern. Beispielsweise kann als Drehbolzen eine entlang ihres Schaftes mit einer Nut versehene und einen Schraubkopf aufweisende Schraube verwendet werden. Durch eine Einkerbung am Schraubenkopf und entsprechende Markierungen an der Befestigungshalterung, vorzugsweise an den Seitenteilen, kann auf einfache Weise eine Anzeige für die eingestellte Drehposition installiert werden.

Schließlich wird eine verstellbare Schwenkvorrichtung für eine landwirtschaftliche Halterungsanordnung gemäß der eingangs genannten Art vorgeschlagen, wobei in der Schwenkvorrichtung insbesondere eine einen zylindrischen Schaft aufnehmende und eine Lagerbuchsenachse aufweisende Lagerbuchse enthalten ist. Die Lagerbuchse enthält eine Montagebohrung mit einer zur Lagerbuchsenachse beabstandeten Bohrungsachse. Durch die nicht konzentrische Anordnung der Montagebohrung zur Lagerbuchsenachse wird die Lagerbuchse als Exzenter ausgebildet. Des Weiteren ist ein Befestigungsmittel, eine Fixiereinrichtung und ein Anzeigemittel enthalten.

Eine erfindungsgemäße gefederte Halterungsanordnung eines Bodenbearbeitungsgeräts umfasst eine spiralförmige Feder, die zwischen einer (ersten) oberen Fläche an der Befestigungshalterung und einer (zweiten) unteren Fläche im Bereich des Anschlussendes der Schaftanordnung bzw. an einer Fläche auf dem Gussteil zusammengedrückt ist. Die Schaftanordnung ist durch eine Schwenkvorrichtung, vorzugsweise über ein Gussteil mit der Befestigungshalterung verbunden, wobei die Schwenkvorrichtung eine quer zur Bewegungsrichtung verlaufende Schwenkachse enthält. Im Rahmen der vorliegenden Beschreibung ist unter Richtungsangaben die Bewegungsrichtung der Halterungsanordnung im Normalbetrieb anzusehen; hinter der Schwenkvorrichtung bedeutet demgemäß in Bewegungsrichtung hinter der Schwenkvorrichtung. Die Schaftanordnung ist auf der Anschlussseite mit dem Gussteil und auf der Werkzeugsanschlussseite mit dem Bodenbearbeitungswerkzeug verbunden. Die Feder ist zwischen den beiden Flächen vorgespannt (zusammengedrückt) und spannt die dem Bodenbearbeitungswerkzeug zugewandte Seite der Schaftanordnung in eine Position vor, in der das Bodenbearbeitungswerkzeug auf den Boden einwirkt. Erfindungsgemäß weist die Feder beim normalen Bodenbearbeitungsbetrieb zwischen der ersten und zweiten Fläche im Wesentlichen freie Windungen auf, ihr Innenraum ist also frei von einer Kontroll- oder Spannungsübertragungsstruktur. Das Gussteil enthält einen Anschlagbereich, der sich ausgehend von der Schwenkachse nach vorn erstreckt. Der Anschlagbereich tritt mit dem Boden der Befestigungshalterung in Kontakt, wobei der Boden einen Anschlag darstellt, gegen den der Anschlagbereich bei Erreichen der Bodeneingriffsposition der Schaftanordnung anschlägt. Dadurch kann ein Spannungsübertragungsteil zwischen Gussteil und Befestigungshalterung eingespart werden. Die Halterungsanordnung enthält des Weiteren einen zweiten Anschlag um eine Aufwärtsschwenkbewegung zu begrenzen, wobei der zweite Anschlag durch die Feder gegeben ist, wenn diese vollständig zusammengedrückt wird. Bleibende Verformungen der Feder oder Beschädigungen sind dabei ausgeschlossen. Somit werden beide Anschlagvorgänge bei einer Abwärtsschwenkbewegung und bei einer Aufwärtsschwenkbewegung durch nur ein Gussteil realisiert.

Um eine Einstellvorrichtung für die Schaftanordnung und Werkzeugneigung trotz eines fest an der Befestigungshalterung installierten Anschlags zu schaffen wird die Schwenkvorrichtung mit einem Exzentermechanismus, der die Schwenkachse relativ zum Anschlag veränderbar macht, ausgestattet. Der Exzentermechanismus umfasst die Lagerbuchse, den Drehbolzen als Befestigungselement, die Fixiereinrichtung samt Nut-Feder-Anordnung zwischen Buchse und Bolzen, sowie eine Anzeigevorrichtung. Der Exzenter ist auf der Befestigungshalterung an dafür vorgesehene Bohrungen über das Befestigungselement gelagert und mittels einer Sicherungsschraube an den Seitenwänden der Befestigungsvorrichtung festellbar, so dass wählbare Neigungswinkeleinstellungen für das Bodenbearbeitungswerkzeug arretiert werden können. Eine Umrüstung des Exzentermechanismus an entlang der Befestigungshalterung versetzten Bohrungen oder das Verschieben des Exzentermechanismus in Langlöchern zur Einstellung des Neigungswinkels sind nicht notwendig.

Es muss lediglich die Sicherungsmutter gelöst und der Exzenter um seine Rotationsachse mittels Drehung des Montagebolzens bzw. Drehbolzens bzw. Lagerbolzens gedreht und wieder arretiert werden. Entsprechende Markierungen an den Seitenflächen der Befestigungsvorrichtung geben Aufschluss über die aktuelle Stellung des Exzenters. Dies hat den Vorteil, dass mehrere Halterungsvorrichtungen auf einfache und schnelle Weise mit gleichen Einstellungen versehen werden können. Die Ausführungen sind kostengünstig und konstruktiv einfach gestaltet und überwinden gegenüber anderen konventionellen Lösungen die Probleme bei der Einstellung einer Schaftanordnung mit nicht verstellbarem Anschlag.

Die vorliegende Erfindung bietet aufgrund ihres konstruktiv einfachen Aufbaus weitere Ausgestaltungsmöglichkeiten. So könnte auf einfache Weise die Ausbildung der Schaftanordnung derart gestaltet werden, dass Schaft und Gussteil einteilig ausgebildet sind. Durch eine einteilige Ausführung der Schaftanordnung, welche ein Schwenk- und Anschlagbereich enthält, könnte das verwendete Gussteil eingespart und eine weitere Reduzierung der Teilevielfalt erzielt werden. Dabei kann der Anschlagbereich auf eine an der Befestigungshalterung oder am Werkzeugträger befindliche Fläche anschlagen, da keine zusätzlichen Teile zur Verstellung des Anschlages benötigt werden. Zusätzliche Teile, die bei alternativen Einstellvorrichtungen zur Verstellung des Anschlags erforderlich wären, stellen Verlustgegenstände dar und weisen zusätzliche Verschleißteile auf.

Anhand der Zeichnungen, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer gefederten Halterungsanordnung mit einem festen unteren Anschlag, welche einen Neigungseinstellmechanismus zur Einstellung der Schaftposition aufweist, wobei ein Montagebolzen einer Lagerbuchse zur besseren Darstellung der Exzentrizität der Anordnung entfernt wurde,
- Fig. 2: eine zu Fig. 1 ähnliche Ansicht, wobei der Neigungseinstellmechanismus in einer Zwischenposition dargestellt ist,
- Fig. 3: eine zu Fig. 1 ähnliche Ansicht, wobei der Neigungseinstellmechanismus im Gegensatz zu Fig. 1 in einer eingestellten Position dargestellt ist,
- Fig. 4: eine Ansicht eines Bereichs der gefederten Halterungsanordnung aus Fig. 2 von der entgegengesetzten Seite, in der Einstellmarken für einen Bolzenkopf zur visuellen Darstellung der Neigungswinkeleinstellung dargestellt sind,
- Fig. 5: eine Seitenansicht der Lagerbuchse der Neigungswinkeleinstellung mit exzentrischer Bohrung,
- Fig. 6: eine Endansicht der Lagerbuchse aus Fig. 5,
- Fig. 7: eine Seitenansicht eines Lagerbolzens für die Neigungswinkeleinstellung und
- Fig. 8: eine Endansicht des Lagerbolzens aus Fig. 7.

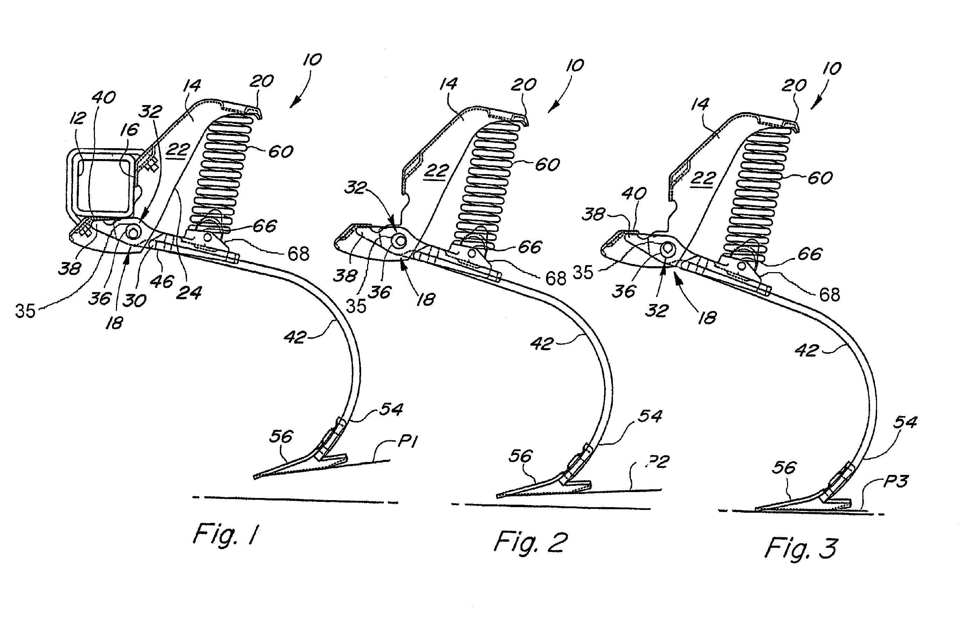

In der Figur 1 ist eine gefederte Halterungsanordnung 10 dargestellt, welche mit einem sich quer erstreckenden Werkzeugträger 12 rechteckigen Querschnitts für Arbeitsgeräte verbunden ist. Die Halterungsanordnung 10 umfasst eine sich rückwärtig öffnende, kanalförmige Halterung 14 mit einem vorderen Befestigungsabschnitt 16, einem unteren hinteren Schwenkbereich 18 und einer oberen, an einer Feder 60 anliegenden ersten Fläche 20, die rückwärtig und oberhalb des Schwenkbereichs 18 angeordnet ist. Die Halterung 14 enthält aufrecht verlaufende Seitenteile 22, die in hintere aufrecht verlaufende Kanten 24 auslaufen, welche sich zwischen dem Schwenkbereich 18 und der ersten Fläche 20 erstrecken. Die Halterungsanordnung 10 ist dabei, mit Ausnahme des Schwenkbereichs 18, im Wesentlichen in der Form ausgebildet, wie es in den Patenten US 6 250 398 A, US 6 250 397 und US 6 065 548 beschrieben wird. Hierbei sei darauf hingewiesen, dass die erfindungsgemäße Einstellungseinrichtung auch in Verbindung mit andersartigen Schafttypen eingesetzt werden kann.

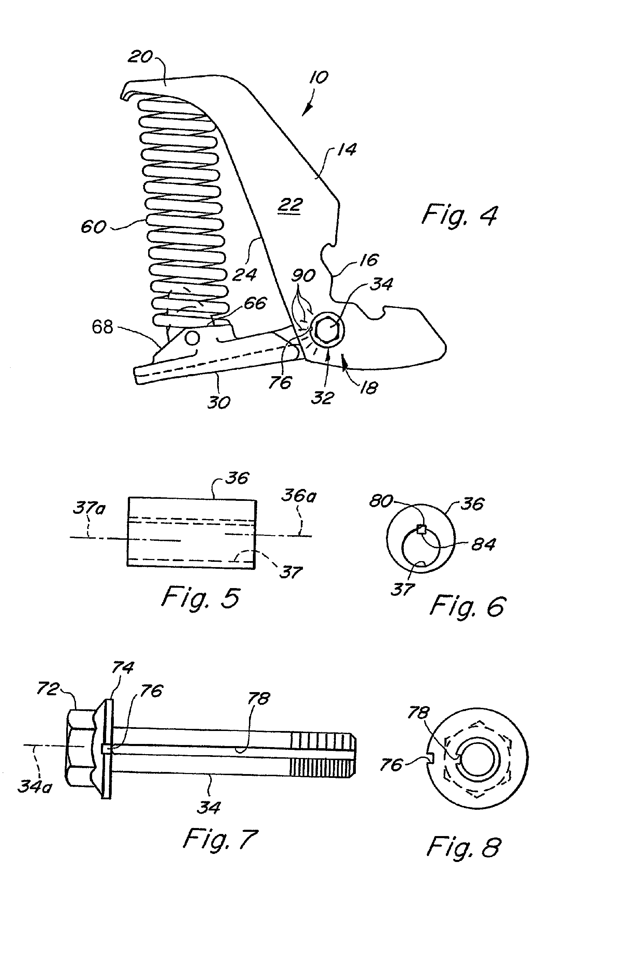

Ein Schaftträgergussteil 30 ist schwenkbar mit dem hinteren Schwenkbereich 18 durch eine einstellbare Lagerbuchsenanordnung 32 verbunden. Die Lagerbuchsenanordnung 32 enthält einen mit einem Flansch versehenen Lagerbolzen 34 (siehe Figuren 4 und 7) und eine zylindrische Lagerbuchse 36 mit einer Zylinderachse 36a. Die Lagerbuchse 36 enthält eine exzentrische Bohrung 37 mit einer zu der Zylinderachse 36a versetzten Bohrungsachse 37a. Der Lagerbolzen 34 sichert die Buchse 36 auf der Halterung 14 zwischen den Seitenteilen 22. Die Lagerbuchsenanordnung 32 definiert eine Schwenkvorrichtung für den Schaft 42 mit einer von der Drehposition der Lagerbuchse 32 abhängigen Schwenkachse 36a.

Das Schaftträgergussteil 30 umfasst eine sich von vorn nach hinten erstreckende Erweiterung 38, welche unter einem festen Anschlag 40 von der Bohrung 37 aus nach vorn gerichtet ist, wobei der Anschlag 40 eine abwärtsgerichtete Schwenkbewegung (bezüglich der Ansichten in den Figuren 1 bis 3 im Uhrzeigersinn) begrenzt, um eine vorgewählte Bodeneingriffsposition gemäß der in Figur 1 dargestellten durchgezogenen Linien einzurichten. Alternativ könnte der Anschlag 40 auch die Unterseite des Werkzeugträgers 12 oder ein ähnlicher befestigter Bereich sein. Die Erweiterung 38 weist eine Breite auf, welche ungefähr gleich, jedoch etwas geringer ausgebildet ist, als der Abstand zwischen den beiden Seitenteilen 22.

Ein c-förmig ausgebildeter Schaft 42 enthält ein offenes oberes Ende 46, welches durch geeignete Mittel, wie z. B. Bolzen- oder Gabelkopfverbindungen, an das Schaftträgergussteil 30 befestigt ist. Der Schaft 42 erstreckt sich ausgehend vom Ende 46 kurvenförmig abwärts und vorwärts bis hin zu einem unteren werkzeugaufnehmenden Ende 54, welches ein Bodenbearbeitungswerkzeug oder eine Schaufel 56 aufnimmt.

Eine Spiralfeder 60 ist freiliegend zwischen der oberen an der Feder 60 anliegenden ersten Fläche 20 und einer unteren an der Feder 60 anliegenden Fläche 66 am Schaftträgergussteil 30 eingespannt, wobei die Windungen der Feder 60 frei von Spannelementen oder Führungselementen sind. Die Feder 60 ist vorgespannt, um eine Federkraft aufzubringen, mit der die gefederte Halterungsanordnung 10 der Bodenbearbeitungsmaschine während der Bodeneingriffsposition, in der der Anschlag 40 erreicht wird, wie die Figuren 1 bis 3 zeigen, behaftet ist. Die Vorspannung der Feder 60 in Kombination mit der Wirkung des fest installierten Anschlags belastet den Schwenkungspunkt und verhindert Lockerungen im Schwenkbereich 18. Die an der Feder 60 anliegende Fläche 66 umfasst einen ersten Federaufnahmebereich 66, welcher im Wesentlichen parallel zu der oberen an der Feder 60 anliegenden ersten Fläche 20 ausgerichtet ist und die untere Windung der Feder 60 abstützt, wenn sich der Schaft 42 in der Bodeneingriffsposition befindet, und einen zweiten Federaufnahmebereich 68, welcher im Wesentlichen parallel zu der oberen an der Feder 60 anliegenden ersten Fläche 20 ausgerichtet ist und die untere Windung der Feder 60 abstützt, wenn der Schaft 42 eine oberste Auslenkstellung erreicht.

Die einstellbare Lagerbuchsenanordnung 32 ermöglicht Einstellungen der Schaftposition und des Werkzeugneigungswinkels, wie am deutlichsten in Figur 1 bis 3 dargestellt. Der Lagerbolzen 34 (siehe Figur 4 und 7) enthält ein mit einem Kopf versehenes Ende 72 mit einem Flansch 74, an dem eine Einstellkerbe 76 ausgebildet ist. Eine Nut 78 erstreckt sich axial entlang des Bolzenschaftes von der Kerbe 76 aus zu einem Gewindeende. Eine entsprechend ausgebildete Gegennut 80 ist in der Lagerbuchse 36 an dem am innersten gelegenen Bereich der Bohrung 37 (Figur 5 und 6) angeordnet. Die Bohrung 37 ist bezüglich an den Seitenteilen 22 der Halterung 14 befindlicher kreisförmiger Montagebohrungen ausgerichtet, und der Lagerbolzen ist eingefügt. Um die Lagerbuchse 36 in eine mit dem Lagerbolzen übereinstimmende Rotationsbewegung um eine im Wesentlichen festgelegte Lagerbolzenachse 34a zu zwingen ist außerdem eine Passfeder 84 in die Nuten 78 und 80 eingefügt. Eine konventionelle Sicherheitsmutter (nicht gezeigt) wird auf das Gewindeende des Lagerbolzens 34 geschraubt. Bei angezogenem Lagerbolzen 34 ist die Lagerbuchse 36 drehfest zwischen den Seitenteilen 22 der Halterung 14 gesichert, wobei durch die Drehposition des Lagerbolzens 34 ein Schwenkungspunkt für den Schaft 42 definiert wird, welcher auf einer Schwenkachse liegt, deren Lage in Abhängigkeit von der Drehposition der Lagerbuchse 36 (und damit auch von der Drehposition des Lagerbolzens 34) veränderlich ist.

Einstellmarkierungen 90 (Fig. 4) auf dem Seitenteil 22 der Halterung 14 wirken mit der Einstellkerbe 76 am Flansch 74 zusammen, um eine Anzeige der Schwenkachseneinstellung und damit des Neigungswinkels (siehe P2 aus Fig. 2) des Werkzeugs 56 zu bilden. Durch Lösen der Sicherungsmutter und durch Rotieren des Lagerbolzens 34 und der Lagerbuchse 36 um die fixierte Lagerbolzenachse 34a wird die Lage der Schwenkachse relativ zum Anschlag 40 verändert, so dass sich die Schaftposition und der Neigungswinkel des Werkzeugs 56 ändern. Ein Bediener kann schnell nebeneinanderliegende Halterungsanordnungen 10 hinsichtlich einer gemeinsamen Grundstellung durch Verstellen der Lagerbolzen 34 einstellen, indem die Einstellkerben 76 in einer gleichen Position relativ zu den Einstellmarkierungen ausgerichtet werden.

Während des Betriebs, in der Annahme, dass sich die einstellbare Lagerbuchsenanordnung 32 in einer Zwischenstellung befindet, wie es beispielhaft in Figur 2 und 4 dargestellt ist, kann der Bediener den Neigungswinkel des Werkzeugs 56 durch Lösen der Sicherungsmutter am Lagerbolzen 34 und durch Drehen des Lagerbolzens 34 mit der Lagerbuchse 36, so dass sich die Bohrung 37 relativ zum Anschlag 40 abwärts bewegt, vergrößern (Fig. 1). Dieser Vorgang verschiebt die Lage der effektiven Schwenkachse des Schaftes 42 nach oben, wodurch das Werkzeugende 54 des Schaftes 42 angehoben und die Neigung (P1 aus Fig. 1) des Werkzeugs 56 erhöht wird. Will der Bediener das Werkzeugende 54 absenken und dadurch die Neigung (P3 aus Fig. 3) des Werkzeugs 56 reduzieren, wird der Lagerbolzen 34 gelöst und derart gedreht, dass die effektive Schwenkachse des Schaftes nach unten verschoben wird. Sobald die gewünschte Schafteinstellung erreicht wurde, muss ein Bediener nur noch den Lagerbolzen 34 feststellen. Auf diese Weise können an einer Halterungsanordnung Schaft- und Werkzeugneigungseinstellungen schnell, einfach und erkennbar vorgenommen werden, ohne dass eine Verlagerung des Anschlags durchgeführt werden muss.

## Patentansprüche

1. Gefederte Halterungsanordnung (10), die zum Bewegen in eine Vorwärtsrichtung über den Boden eingerichtet ist, mit einer Befestigungshalterung (14), einer Schaftanordnung (42), welche ein oberes Anschlussende und ein unteres Werkzeuganschlussende (54) zur Aufnahme eines Bodenbearbeitungswerkzeugs (56) aufweist, einer Schwenkvorrichtung, mit der das Anschlussende der Schaftanordnung (42) zum Verschwenken um eine im Wesentlichen quer zur Vorwärtsrichtung verlaufenden Schwenkachse (36a) mit der Befestigungshalterung (14) verbunden ist, einem Federungszusammenbau, mit dem das Werkzeuganschlussende (54) in Richtung des Bodens gedrückt wird und einem Anschlag (40), welcher in einer relativ zur Befestigungshalterung (14) im Wesentlichen festgelegten Position beabstandet zur Schwenkachse (36a) angeordnet ist, so dass eine Schwenkbewegung der Schaftanordnung (42) um die Schwenkachse (36a) nach unten in eine Arbeitsposition begrenzt wird, **dadurch gekennzeichnet, dass** die Schwenkvorrichtung eine Einstellvorrichtung enthält, mit der eine Bewegung der Schwenkachse (36a) relativ zum Anschlag (40) derart durchführbar ist, dass eine untere Arbeitsposition des Werkzeuganschlussendes (54) einstellbar ist.

2. Halterungsanordnung nach Anspruch 1, **dadurch gekennzeichnet, dass** sich die Schwenkachse (36a) auf der Schaftanordnung (42) befindet.

3. Halterungsanordnung nach einem der vorhergehenden Ansprüche, **dadurch gekennzeichnet, dass** die Schwenkvorrichtung eine sich von der Schwenkachse (36a) aus radial erstreckende Erweiterung (38) enthält, welche in Kontakt mit dem Anschlag (40) tritt, sobald das Werkzeug (56) in eine unterste Position bewegt wird.

4. Halterungsanordnung nach einem der vorhergehenden Ansprüche, **dadurch gekennzeichnet, dass** die Schwenkvorrichtung ein Gussteil (30) enthält, welches eine kreisförmige Bohrung (35) und eine integrierte, mit dem Anschlag (40) in Kontakt tretende und ausgehend von der Bohrung (35) sich radial erstreckende Erweiterung (38) aufweist.

5. Halterungsanordnung nach einem der vorhergehenden Ansprüche, **dadurch gekennzeichnet, dass** die Einstellvorrichtung einen mit der Befestigungshalterung (14) verbundenen und die Schwenkachse (36a) definierenden Exzenter (36) enthält.

6. Halterungsanordnung nach Anspruch 5, **dadurch gekennzeichnet, dass** ein Verbindungsteil (34) enthalten ist, welches den Exzenter lösbar gegen Verdrehen gegenüber der Befestigungshalterung (14) sichert und wahlweise verschiedene Drehpositionen des Exzenters zur Einstellung der Anschlagstellung erlaubt.

7. Halterungsanordnung nach Anspruch 5 oder 6, **dadurch gekennzeichnet, dass** der Exzenter eine die Schwenkachse (36a) definierende drehbare Lagerbuchse (36) enthält, wobei die Lagerbuchse (36) eine von der Schwenkachse (36a) beabstandete Rotationsachse (37a) enthält, so dass eine Drehung der Lagerbuchse (36) eine Verschiebung der Schwenkachse (36a) hervorruft.

8. Halterungsanordnung nach Anspruch 7, **dadurch gekennzeichnet, dass** ein Feststellmittel, welches die Lagerbuchse (36) in einer ausgewählten Drehposition feststellt, und Anzeigemittel enthalten sind, welche eine sichtbare Anzeige der ausgewählten Drehposition liefern.

9. Halterungsanordnung nach Anspruch 7 oder 8, **dadurch gekennzeichnet, dass** ein Drehbolzen (34) enthalten ist, welcher sich durch die Lagerbuchse (36) erstreckt und drehfest mit der Lagerbuchse (36) verbunden ist, so dass eine Drehung des Drehbolzens (34) eine Drehung der Lagerbuchse (36) hervorruft.

10. Halterungsanordnung nach Anspruch 9, **dadurch gekennzeichnet, dass** der Drehbolzen (34) sich durch die Befestigungshalterung (14) erstreckt und um eine feste Drehbolzenachse (34a) drehbar ist und dass der Drehbolzen (34) ein Anzeigemittel enthält, welches eine Anzeige der Drehposition der Lagerbuchse (36) liefert.

11. Halterungsanordnung nach Anspruch 5 bis 10, **dadurch gekennzeichnet, dass** der Exzenter eine kreisförmige Lagerbuchse (36) mit einer zentralen Schwenkachse (36a) und eine Montagebohrung (37) mit einer von der zentralen Schwenkachse (36a) beabstandeten Bohrungsachse (37a) umfasst und des Weiteren ein Verbindungsteil (34) enthalten ist, das sich durch die Bohrung (37) und die Befestigungshalterung (14) erstreckt, wobei der Exzenter um die Bohrungsachse (37a) drehbar ist.

12. Halterungsanordnung nach einem der vorhergehenden Ansprüche, **dadurch gekennzeichnet, dass** die Befestigungshalterung (14) Seitenteile (22) enthält und dass die Einstellvorrichtung lösbar an den Seitenteilen befestigt ist.

13. Halterungsanordnung nach einem der vorhergehenden Ansprüche, **dadurch gekennzeichnet, dass** die Schwenkvorrichtung einen Anschlagbereich (38) enthält, welcher sich radial von der Schwenkachse (36a) aus erstreckt und mit der Schaftanordnung (42) auf einer Kreisbahn rotiert, wobei auf einem festgelegten Punkt der Kreisbahn der Anschlag (40) durch die Befestigungshalterung (14) definiert ist.

14. Halterungsanordnung nach einem der vorhergehenden Ansprüche, **dadurch gekennzeichnet, dass** die Schwenkvorrichtung ein Befestigungsmittel enthält, welches einen Drehbolzen (34) aufweist.

15. Halterungsanordnung nach Anspruch 14, **dadurch gekennzeichnet, dass** die Schwenkvorrichtung eine Fixiereinrichtung enthält, welche eine Passfeder (84) aufweist, wobei die Passfeder (84) von einer Nut (78) am Drehbolzen (34) aufgenommen wird.

16. Halterungsanordnung nach Anspruch 14 oder 15, **dadurch gekennzeichnet, dass** das Befestigungsmittel ein mit einem Kopf versehenes Teil (34) enthält, welches in die Montagebohrung (37) einführbar ist, wobei das Teil (34) Anzeigemittel aufweist, welche zur Bestimmung der eingestellten Stellung der Schwenkvorrichtung eine sichtbare Anzeige der ausgewählten Drehposition des Befestigungsmittels liefern.

17. Verstellbare Schwenkvorrichtung einer gemäß einem der vorhergehenden Ansprüche ausgebildeten Halterungsanordung (10) .
